(19) Europäisches Patentamt
European Patent Office
Office européen des brevets

(11) **EP 0 945 548 A2**

(12) **EUROPÄISCHE PATENTANMELDUNG**

(43) Veröffentlichungstag:
29.09.1999 Patentblatt 1999/39

(51) Int. Cl.$^6$: **E01C 19/20**, A01C 17/00

(21) Anmeldenummer: 98122345.6

(22) Anmeldetag: 25.11.1998

(84) Benannte Vertragsstaaten:
AT BE CH CY DE DK ES FI FR GB GR IE IT LI LU MC NL PT SE
Benannte Erstreckungsstaaten:
AL LT LV MK RO SI

(30) Priorität: 26.03.1998 DE 19813289

(71) Anmelder: ROBERT BOSCH GMBH
70442 Stuttgart (DE)

(72) Erfinder: Keuper, Gerhard
71229 Leonberg (DE)

(54) **Einrichtung zur Dosierung und Verteilung von Streugut**

(57) Es wird eine Einrichtung zur Dosierung und Verteilung von Streugut vorgeschlagen, die einen rotierenden Streuteller (14) aufweist, der mit dem Streugut (11) beschickbar ist. Als Antrieb ist ein, mit einem Druckmittel betriebener, in seiner Drehzahl regelbarer Hydromotor (16) vorhanden und das Streugut (11) wird mit einer steuerbaren Dosiervorrichtung (13) auf den Streuteller (14) aufgebracht. Zur möglichst genauen Dosierung des Streuguts ist ein Regelgerät (19) vorgesehen, das mit einem abgespeicherten Belastungskennfeld (37) arbeitet, in dem der durchgesetzte Massenstrom (ṁ) des Streuguts abhängig von der Druckdifferenz ($\Delta$p) über den Hydromotor (16) für unterschiedliche Drehzahlen (n) des Streutellers (14) abgespeichert ist, wobei zumindest der Istwert der Drehzahl für den Hydromotor verarbeitet wird. Das Regelgerät (19) ermittelt unter Ausnutzung des Belastungskennfeldes (37) eine Stellgröße ($S_D$) für eine Dosiereinrichtung (13) und eine zusätzliche Stellgröße ($S_V$) für die Regelung der Drehzahl (n) des Hydromotors (16) derart, daß der Massenstrom des Streuguts (11) in Richtung kleiner Regelabweichung beeinflußt wird.

Fig. 1

EP 0 945 548 A2

## Beschreibung

Stand der Technik

Die Erfindung geht aus von einer Einrichtung zur Dosierung und Verteilung von Streugut nach der Gattung des Hauptanspruchs.

Es ist bereits eine Einrichtung aus der DE-PS 24 63 387 bekannt, mit der ein Streugut, zum Beispiel Streusalz, in einer vorgegebenen Menge auf eine bestimmte Flächeneinheit aufgebracht werden kann. Die Dosierung des Streuguts muß hierbei unter Berücksichtigung der Vorwärtsbewegung des Fahrzeugs vorgenommen werden, das die Anordnung trägt oder zieht. Bei der bekannten Einrichtung wird die Dosierung im wesentlichen über eine Drehzahlsteuerung eines Hydromotors, in Abhängigkeit von der Geschwindigkeit des Fahrzeugs und von einer Dosiervorgabe, vom Fahrer des Fahrzeugs vorgenommen. Eine Kontrolle des ausgebrachten Streuguts wird über Zählvorgänge im Bereich eines Streutellers durchgeführt. Hierfür ist ein Streuindikator vorhanden, der den Streuvorgang überwacht. Eine häufig geforderte hohe Genauigkeit der Streugutausbringung kann mit dieser bekannten Anordnung nur unzureichend erreicht werden.

Ferner ist eine gattungsgemäße Einrichtung zur Dosierung und Verteilung von Streugut aus der DE-A1 44 17 549 bekannt, bei der durch die indirekte Erfassung des Massenstromes über den Druck des Druckmittels im Hydromotor sowie die Messung der Drehzahl des Streutellers eine genauere und schnellere Dosierung durchgeführt werden kann. Eine Druckmessung mit einem entsprechenden elektrohydraulischen Drucksensor, der eine dem Drehmoment des Hydromotors weitgehend proportionale Größe liefert, läßt sich mit relativ einfachen Mitteln durchführen und davon abhängig eine Dosiervorrichtung für den Massenstrom steuern. Zugleich wird über einen Drehzahlsensor die Drehzahl des Streutellers erfaßt, wobei eine anschließende elektronische Auswertung in einem Regelgerät erfolgt, so daß über eine zusätzliche Stellgröße ein Ventil steuerbar ist, das den zum Hydromotor fließenden Druckmittelstrom beeinflußt. Mit dieser Einrichtung kann eine On-Line-Regelung für den auszubringenden Massenstrom aufgebaut werden. Hierzu wird eine mathematische Gleichung für den Druck am Hydromotor als Funktion des Massenstromes und der Drehzahl verwendet, wobei als Ausgangsbasis die Aussage eines Impulssatzes verwendet wird. Es kann nuin sein, daß diese mathematische Beziehung nicht alle Einflüsse ausreichend genau berücksichtigt und das Steuerergebnis nicht optimal ist. So wird durch diese mathematische Beziehung beispielsweise nicht die radiale Geschwindigkeitskomponente des Streugutes auf dem Streuteller berücksichtigt und die daraus resultierenden Lastmomente auf den Tellerantrieb, wie sie sich aus der Coriolis-Beschleunigung ergeben. Ferner ist ungünstig bei dieser Einrichtung, daß nichtlineare Effekte des Zusammenhangs zwischen Massenstrom und Druck bzw. Drehmoment am Hydromotor nicht ausreichend berücksichtigt werden können. Auch die Reibungseinflüsse im Hydromotor werden nur ungenügend kompensiert, wobei gerade diese Reibungseinflüsse abhängig von der Drehzahl, dem Druck oder der temperaturabhängigen Viskosität des Druckmittels relativ stark variieren. Auch kann die Genauigkeit der Einrichtung besonders dann leiden, wenn das Signal für den Massenstrom nur vom Zulaufdruck des Hydromotors abgeleitet wird und im Ablauf des Hydromotors noch Drücke herrschen, die mehr oder weniger stark von Null abweichen und somit die Ermittlung des drehmomentabhängigen Signals verfälschen. In manchen Fällen kann es ungünstig sein, daß der Massenstrom des Streuguts möglichst genau auf einen bestimmten Punkt des Streutellers aufgebracht werden muß.

Vorteile der Erfindung

Die erfindungsgemäße Einrichtung zur Dosierung und Verteilung von Streugut mit den kennzeichnenden Merkmalen des Hauptanspruchs hat demgegenüber den Vorteil, daß mit ihr eine genauere und schnellere Dosierung mit relativ einfachen Mitteln kostengünstig erreichbar ist. Durch die Verwendung eines Belastungskennfeldes, das die typischen und individuellen Eigenschaften des Streutellerantriebes sowie des Streuverhaltens berücksichtigt, können nichtlineare Einflüsse und Zusammenhänge weitgehend kompensiert werden. Besonders günstig ist dabei ein Belastungskennfeld, bei dem das Druckgefälle über den Hydromotor in Abhängigkeit vom Massenstrom für unterschiedliche Drehzahlen des Streutellers ermittelt und gespeichert wird. Anstelle des Druckgefälles kann dabei auch das Abtriebs-Drehmoment des Hydromotors verwendet werden. Mit einem derartigen Belastungskennfeld lassen sich auch unterschiedliche Ausgestaltungen des Regelgeräts sowie der Einrichtung zur Dosierung und Verteilung des Streuguts erreichen. Die Aufbringung des Streuguts auf den Streuteller braucht nicht mehr punktgenau sein, sondern kann an beliebiger Stelle zwischen Streutellerachse und Streutellerrand erfolgen.

Durch die in den Unteransprüchen aufgeführten Maßnahmen sind vorteilhafte Weiterbildungen und Verbesserungen der im Hauptanspruch angegebenen Einrichtung möglich. Besonders vorteilhaft ist eine Ausbildung nach Anspruch 4, wenn das Belastungskennfeld mit zwei gemessenen Istwerten arbeitet und daraus den Massenstrom ableitet. Dies erlaubt eine besonders genaue Regelung, wobei ein relativ einfaches Belastungskennfeld verwendbar ist. Diese Einrichtung läßt sich auch einfach mit vorhandenen Mitteln darstellen und arbeitet mit einem verhältnismäßig einfachen Ventil für die Steuerung des Druckmittelstroms. Vorteilhaft ist ferner, wenn gemäß Anspruch 5 die über den Hydromotor abfallende Druckdifferenz gemessen wird, so daß keine Verfälschungen infolge eines Rücklaufdrucks auftreten können. Die Messung der Druckdifferenz läßt sich mit relativ geringem Mehraufwand darstellen. Zweckmäßig ist ferner eine Ausbildung gemäß Anspruch 6, wenn das Drehmoment des Hydromotors mit einer entsprechenden Meßnabe ermittelt wird. Auf diese Weise läßt sich ein störender Einfluß der Reibmomente des Hydromotors mit relativ einfachen Mitteln ausblenden; dadurch kann auch ein einfacheres Belastungskennfeld verwendet werden. Eine besonders zweckmäßige Ausgestaltung ergibt sich gemäß Anspruch 7, wenn nur mit der einzigen Meßgröße Drehzahl für das Belastungskennfeld gearbeitet wird, so daß kein Drucksensor bzw. kein Drehmomentsensor notwendig ist. Damit verringert sich der Darstellungsaufwand für die Einrichtung erheblich; jedoch muß in diesem Fall ein besonderes Druckwaage-Regelventil verwendet werden, das nun das Druckgefälle am Hydromotor auf den jeweils eingestellten Wert konstant regelt. Bei nur einer Meßgröße läßt sich hier eine Online-Regelung von Drehzahl- und Massenstrom erreichen. Günstig ist es ferner, diese Einrichtung gemäß Anspruch 8 auszubilden, wodurch sich ohne großen, zusätzlichen Aufwand eine größere Dynamik und stabilere Arbeitsweise ergibt.

Weitere vorteilhafte Ausgestaltungen ergeben sich aus den übrigen Ansprüchen, der Beschreibung und der Zeichnung.

Zeichnung

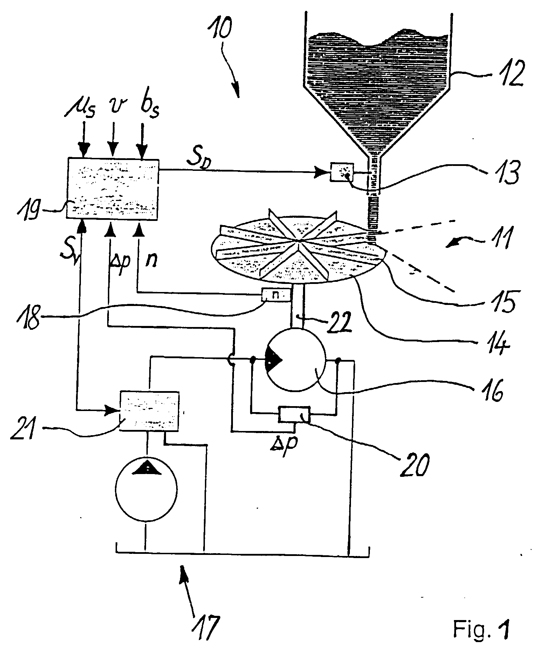

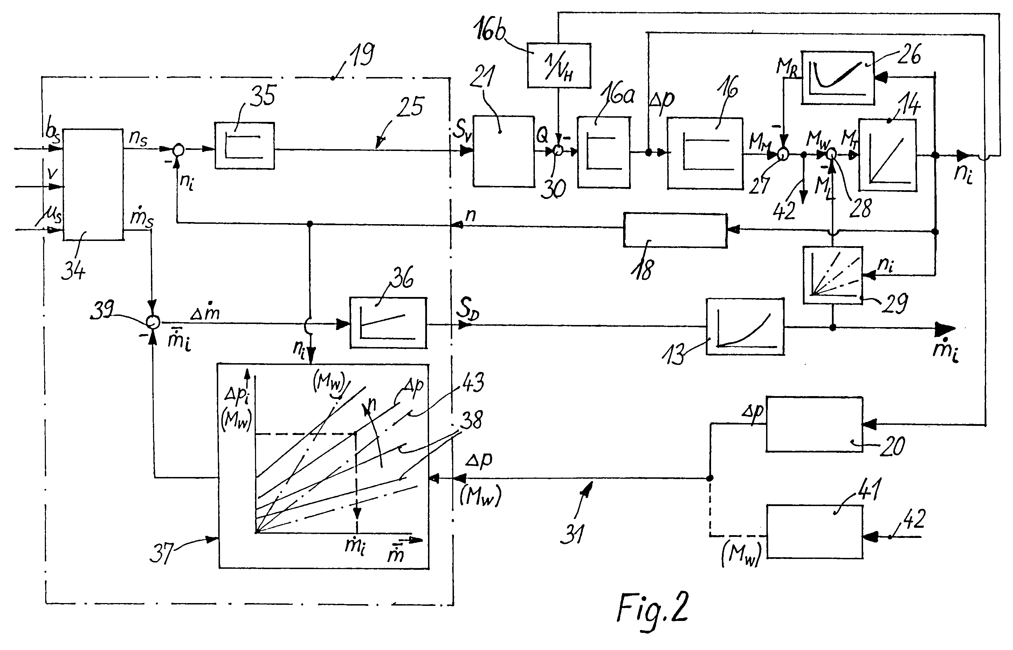

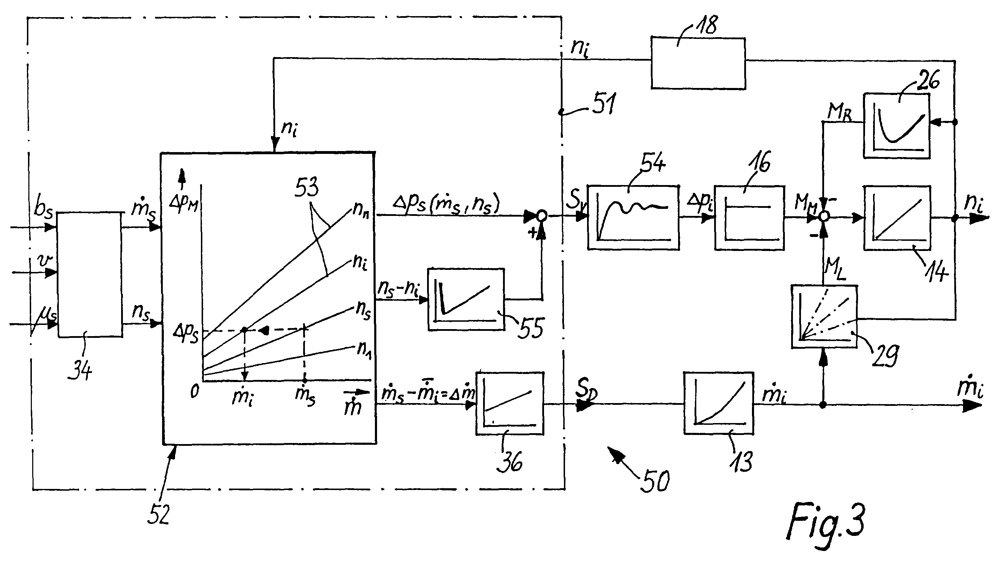

Zwei Ausführungsbeispiele der Erfindung sind in der Zeichnung dargestellt und in der nachfolgenden Beschreibung näher erläutert. Es zeigen Figur 1 eine Einrichtung zur Dosierung und Verteilung von Streugut mit einem Hydromotor in einer gerätetechnischen Ausführungsform in vereinfachter Darstellung, Figur 2 ein Blockschaltbild des ersten Ausführungsbeispiels nach Figur 1 in vereinfachter Darstellung und Figur 3 ein Blockschaltbild eines von Figur 1 abweichenden, zweiten Ausführungsbeispiels der Erfindung.

Beschreibung der Ausführungsbeispiele

In der Figur 1 ist eine erfindungsgemäße Einrichtung 10 zur Dosierung und Verteilung von Streugut 11 gezeigt, bei der dieses Streugut zum Beispiel Streusalz zur Enteisung von Straßen oder Düngemittel bei der Feldbearbeitung sein kann. Das Streugut ist in einem Vorratsbehälter 12 gelagert und wird, gesteuert über eine Dosiervorrichtung 13, auf einen Streuteller 14 aufgebracht. Der rotierende Streuteller weist schaufelartige Flächen 15 auf, die während der Rotation des Streutellers 14 für eine im weitesten Sinn horizontale Verteilung des Streuguts 11 sorgen.

Der Streuteller 14 wird von einem Hydromotor 16 angetrieben, der ein für den Antrieb erforderliches Druckmittel von einem Hydrauliksystem 17 eines die gesamte Einrichtung tragenden oder ziehenden, hier nicht dargestellten, Fahrzeugs erhält. Die Drehzahl n des Hydromotors 16 wird über einen Drehzahlsensor 18 erfaßt und als erste Eingangsgröße und damit als erster Istwert einem Regelgerät 19 zur Verfügung gestellt. Eine über den Hydromotor 16 auftretende Druckdifferenz $\Delta p$ in dem den Hydromotor 16 antreibenden Druckmittel wird über einen Druckdifferenzsensor 20 erfaßt und als zweite Eingangsgröße und damit als zweiter Istwert dem Regelgerät 19 zur Verfügung gestellt.

Als erste Stellgröße $S_V$ erhält ein Ventil 21 ein Steuersignal zur Steuerung des Volumenstroms Q zum Hydromotor 16 und als zweite Stellgröße $S_D$ gibt das Regelgerät 19 ein Steuersignal für die Dosiereinrichtung 13 ab.

Bei der Einrichtung 10 zur Dosierung und Verteilung von Streugut nach Figur 1 wird über die Erfassung und Auswertung der beiden Istwerte Drehzahl n und Druckdifferenz $\Delta p$ eine Auswertung und Steuerung bzw. Regelung des Drehmomentenverlaufs am Streuteller 14 angestrebt. Da das Drehmoment am Hydromotor 16 im wesentlichen proportional ist zum Druckgefälle $\Delta p$ des Druckmittelstroms über den Hydromotor, kann durch eine Messung dieses Druckgefälles $\Delta p$ durch den Druckdifferenzsensor 20 das Drehmoment am Hydromotor 16 bzw. an der Rotationsachse des Streutellers 14 annäherungsweise bestimmt werden. Zudem gilt bei vorliegender Einrichtung 10, daß zumindest bei einer bestimmten Drehzahl des Streutellers 14 ein im wesentlichen proportionaler Zusammenhang zwischen dem Drehmoment und dem durchgesetzten Massenstrom $\dot{m}$ am Streuteller 14 bzw. an der Dosiervorrichtung 13 ist.

In der Figur 2 ist nun die Einrichtung 10 zur Dosierung und Verteilung von Streugut nach Fig. 1 anhand eines Blockschaltbilds näher dargestellt, aus dem die Zusammenhänge und gegenseitigen Einflüsse bei einer derartigen Einrichtung 10 deutlicher erkennbar sind. Wie Figur 2 näher zeigt, ist das Streuteller 14 in einen ersten Drehzahl-Regelkreis 25 geschaltet, bei dem das Regelgerät 19 mit seiner ersten Stellgröße $S_V$ über das Ventil 21 und den Hydromotor 16 den Streuteller 14 antreibt, wobei dessen Drehzahl $n_i$ vom Drehzahlsensor 18 abgegriffen wird und als erste Eingangsgröße dem Regelgerät 19 zugeführt wird. Wie dabei die Figur 2 näher zeigt, setzt sich das Drehmoment $M_T$ zum Antrieb des Streutellers 14 aus mehreren Drehmomentanteilen zusammen. Vereinfacht dargestellt wird dies einmal durch den Block 26, der den rückwirkenden reibungsabhängigen Drehmomentanteil $M_R$ vor allem für den Hydromotor 16 sowie andere Lagerstellen symbolisiert und dessen Anteil $M_R$ an einem ersten Summenpunkt 27 zum eigentlichen Drehmoment $M_M$ des Hydromotors 16 subtrahiert wird. Mit $M_W$ ist das Drehmoment in der Rotationsachse 22 vereinfacht dargestellt. Ferner wird in einem zweiten Summenpunkt 28 ein rückwirkender Drehmomentanteil $M_L$ aufgeschaltet, der von der Belastung des auf den Streuteller 14 auftreffenden Streuguts 11 herrührt. Zu diesem Zweck ist in einem zweiten Block 29 ein Belastungskennfeld des Streutellers 14 dargestellt, wie es die physikalischen tatsächlichen Zusammenhänge ergeben. Wie der zweite Block 29 veranschaulicht, ist der Drehmomentanteil $M_L$ im wesentlichen von dem durchgesetzten Massenstrom des Streumittels $\dot{m}_i$ und von der Drehzahl des Streutellers 14 abhängig. Der erste Block 26 veranschaulicht, daß der reibungsabhängige Drehmomentanteil $M_R$ ganz wesentlich von dem Betriebszustand des Hydromotors abhängig ist, wobei dessen Drehzahl, der Druck, sowie die Viskosität des Druckmittels abhängig von der Temperatur eine erhebliche Rolle spielen.

Das Blockschaltbild nach Figur 2 zeigt nun vereinfacht, wie das Ventil 21 abhängig von der ersten Stellgröße $S_V$ einen Volumenstrom Q steuert, wobei als Ventil z.B. ein verstellbares Stromregelventil verwendbar ist. Mit einem Block 16b wird der aus dem Hydromotor 16 abfließende Volumenstrom gekennzeichnet, dessen Ausgangssignal in einen dritten Summenpunkt 30 vom Volumenstrom Q subtrahiert wird. Ein Block 16a symbolisiert die hydraulische Kapazität im Hydromotor 16, in dem durch die Differenz aus zufließendem minus abfließendem Volumenstrom Q schließlich die Druckdifferenz $\Delta p$ resultiert.

Wie Figur 2 ferner zeigt, ist ein zweiter Steuer-/Regelkreis 31 für den Massenstrom $\dot{m}$ des Streuguts vorgesehen, wozu das Regelgerät 19 mit der zweiten Stellgröße $S_D$ die Dosiervorrichtung 13 ansteuert, welche die Größe des Massenstromes $\dot{m}$ bestimmt. Indirekt abhängig von diesem Massenstrom wird die Druckdifferenz $\Delta p$ am Hydromotor 16 mit Hilfe des Druckdifferenzsensors 20 abgegriffen und somit dieser zweite Istwert $\Delta p$ an das Regelgerät 19 gegeben.

Wie Figur 2 näher zeigt, weist das vorzugsweise in elektronischer Bauweise ausgeführte Regelgerät 19 einen Verteilerrechner 34 auf, dem als Sollwerte die Streubreite $b_S$, die Fahrgeschwindigkeit v des Fahrzeugs, auf der sich die Einrichtung 10 befindet sowie eine gewünschte Streudichte $\mu_s$ bzw. ein gewünschter Massenstrom $m_s$ für das Streugut eingegeben werden. Der Verteilerrechner 34 ermittelt aus diesen drei Eingangswerten zwei Ausgangssignale für die Regelkreise 25 und 31, nämlich ein Sollwert-Drehzahlsignal $n_S$ für das Streuteller 14, sowie ein Sollwertsignal für den durchgesetzten Massenstrom $\dot{m}_S$, um davon abhängig die Dosiervorrichtung 13 anzusteuern. Die Sollwert-Drehzahl $n_S$ wird mit der rückgeführten Istwert-Drehzahl des Streutellers 14 $n_i$ verglichen und die Regelabweichung der Drehzahl gebildet, aus welchem Signal mit Hilfe eines Drehzahl-Reglers 35 die erste Stellgröße $S_V$ zur Ansteuerung des Ventils 21 ermittelt wird. Der augenblickliche Sollwert-Massenstrom $\dot{m}_S$ wird mit einem errechneten Istwert des augenblicklichen Massenstroms $\overline{\dot{m}}_i$ verglichen und daraus eine Regelabweichung $\Delta\dot{m}$ des Massenstroms gebildet, aus dem schließlich mit Hilfe eines Reglerglieds 36 die zweite Stellgröße $S_D$ zur Ansteuerung der Dosiervorrichtung 13 hergeleitet wird. Das Reglerglied 36 kann dabei vorteilhaft als PI-Regler ausgebildet sein.

Wie die Figur 2 ferner zeigt, arbeitet das Regelgerät 19 mit einem abgespeicherten Belastungskennfeld 37, mit dem die typischen und individuellen Eigenschaften des Antriebs des Streutellers 14 sowie des Streuverhaltens berücksichtigt werden. In diesem Belastungskennfeld 37 ist der jeweils durchgesetzte, augenblickliche, nach einem Modell errechnete Istwert des Massenstromes $\overline{\dot{m}}$ in Abhängigkeit vom Druckgefälle $\Delta p_i$ für unterschiedliche Drehzahlen abgelegt, was durch eine Kennlinienschar 38 veranschaulicht ist. In das Belastungskennfeld 37 werden zwei Istwerte eingegeben, nämlich der Istwert der Drehzahl $n_i$ des Streutellers 14 sowie als zweite Eingangsgröße die Druckdifferenz $\Delta p$ vom Druckdifferenzsensor 20. Aus beiden Eingangsgrößen wird mit Hilfe des Belastungskennfeldes 37 als Ausgangsgröße ein errechneter Istwert des Massenstroms $\overline{\dot{m}}_i$ ermittelt, um damit an einem Summenpunkt 39 eine Regelabweichung des Massenstromes $\Delta\dot{m}$ zu bilden. Das Belastungskennfeld 37, das als Modell des Streuantriebs in dem Regelgerät 19 abgelegt ist, liegt somit hier im Rückführzweig des zweiten Steuerregelkreises 31.

Im Betrieb der Einrichtung 10 werden dem Regelgerät 19 an dem Verteilerrechner 34 die Sollwerte für eine Streubreite $b_S$, die Fahrgeschwindigkeit v und den Massenstrom $m_S$ bzw. die Streudichte $\mu_S$ vorgegeben. Der Verteilerrechner 34 ermittelt daraus die augenblicklichen Sollwerte für die Drehzahl $n_S$ und den Massenstrom $\dot{m}_S$ und beeinflußt damit die Regelkreise 25 bzw. 31. Durch die Verwendung des Belastungskennfeldes 37 anstelle einer mathematischen Gleichung können nun die besonderen Eigenschaften des Streutellerantriebs und sein Streuverhalten genauer berücksichtigt werden. Vor allem lassen sich dadurch Drehmomentanteile infolge Reibung im Hydromotor 16 und an anderen Lagerstellen berücksichtigen; zudem werden im Belastungskennfeld 37 auch nichtlineare Effekte des Zusammenhangs zwischen dem Massenstrom $\dot{m}_i$ und der gemessenen Druckdifferenz bzw. Drehmoment am Hydromotor 16 mitabgebildet und somit berücksichtigt. Die radiale Geschwindigkeitskomponente des Streugutes 11 auf den Streuteller 14 und die daraus resultierenden Lastmomente auf den Tellerantrieb, wie sie durch die Coriolis-Beschleunigung verursacht werden, lassen sich bei dieser Regelung ebenfalls berücksichtigen. Durch die Messung des Druckabfalls über den Hydromotor 16, anstelle der Messung eines einfachen Zulaufdrucks stromaufwärts vom Hydromotor, wird verhindert, daß eine Verfälschung des Drucksignals auftritt, wenn im Ablauf des Hydromotors 16 ein Rücklaufdruck auftritt, dessen Wert größer als Null sein sollte. Für die Messung dieser Druckdifferenz $\Delta p$ können anstelle des gezeigten Differenzdrucksensors auch zwei einzelne Absolutdrucksensoren verwendet werden, mit denen die Drücke stromaufwärts und stromabwärts vom Hydromotor gemessen werden. Dabei kann es auch ausreichen, bei Einrichtungen mit zwei Streutellern nur eine einmalige Messung des Druckes in einem gemeinsamen Rücklauf vorzunehmen. Mit der Einrichtung 10 läßt sich somit eine On-line-Regelung für den auszubringenden Massenstrom $\dot{m}_i$ durchführen, die infolge des Belastungskennfeldes 37 hohe Genauigkeitsanforderungen erfüllt. Dabei läßt sich durch die Verarbeitung zweier Istwerte für Drehzahl n und Druckdifferenz $\Delta p$ das Belastungskennfeld 37 verhältnismäßig einfach aufbauen. Ferner ist von Vorteil, daß der Massenstrom des Streuguts nun an jeder beliebigen Stelle auf dem Streuteller 14 aufgebracht werden kann.

Anstelle der in Figur 2 dargestellten Messung und Rückführung des Druckabfalls $\Delta p$ zur Ermittlung des Drehmoments im Hydromotor 16 kann alternativ dazu auch ein Drehmomentsensor 41 verwendet werden, der zum Beispiel als entsprechende Meßnabe ausgebildet wird und in die Rotationsachse 22 geschaltet ist. Dies ergibt dann einen Signalabgriff 42, wie dies vereinfacht in Figur 2 näher dargestellt ist. In diesem Fall meldet dann der Drehmomentsensor 41 ein Drehmomentsignal $M_W$ anstelle des Druckabfalls $\Delta p$ an das Belastungskennfeld 37, das dann mit einer geeigneten Kennlinienschar 43 ausgerüstet ist, welche den Massenstrom in Abhängigkeit vom Drehmoment $M_W$ bei unterschiedlichen Drehzahlen abbilden. Mit dem Belastungskennfeld 37 kann dann anhand der Kennlinienschar 43 ebenfalls der aktuelle Massenstrom ermittelt werden und wie bisher zur weiteren Steuerung bzw. Regelung verwendet werden. Durch die Verwendung der Meßnabe zur Ermittlung des Drehmoments im Hydromotor 16 wird vor allem erreicht, daß die Reibmomente des Hydromotors 16 nicht störend in die Ermittlung des durch die Verteilung des Streugutes gebildeten Lastmomentes eingehen. Wie der Block 26 symbolisiert, ist der Einfluß des Reibmoments veränderlich und stark abhängig vom Betriebszustand des Hydromotors 16, insbesondere dessen Drehzahl, dessen Druck und von der Viskosität des Druckmittels in Abhängigkeit der Temperatur. Eine solche Ermittlung des Massenstromes $\dot{m}_i$ über das Drehmoment hat auch den Vorteil, daß das Belastungskennfeld 37 mit einer vereinfacht aufgebauten Kennlinienschar 43 arbeitet. Bei der Einrichtung 10 wird in beiden Fällen, also bei Verwendung eines Druckdifferenzsensors 20 oder bei Verwendung eines Drehmomentsensors 41 erreicht, daß durch die Verarbeitung zweier Istwertsignale ein relativ einfaches Belastungskennfeld 37 möglich ist, das zudem eine genaue Steuerung bzw. Regelung des Massenstromes $\dot{m}_i$ erlaubt.

Die Figur 3 zeigt in vereinfachter Form eine zweite Einrichtung 50 zur Dosierung und Verteilung von Streugut anhand eines Blockschaltbildes, die sich von der Einrichtung 10 nach Figur 2 wie folgt unterscheidet, wobei für gleiche Bauelemente gleiche Bezugszeichen verwendet werden. Bei der zweiten Einrichtung 50 wird auf eine Sensierung von Druckabfall $\Delta p$ oder Drehmoment $M_M$ vollständig verzichtet, da ausschließlich mit einem einzigen Istwert, nämlich der Ist-Drehzahl $m_i$ gearbeitet wird. Die zweite Einrichtung 50 weist dazu ein anderes Regelgerät 51 auf, das nun mit einem Belastungskennfeld 52 arbeitet. Auch in diesem Belastungskennfeld 52 sind die Massenströme $\dot{m}$ des Streuguts in Abhängigkeit von der Druckdifferenz $\Delta p_m$ über den Hydromotor 16 für unterschiedliche Drehzahlen n abgespeichert, was hier durch eine Kennlinienschar 53 abgebildet ist. Dem Belastungskennfeld 52 werden neben der Istwert-Drehzahl $n_i$ die augenblicklichen Sollwerte für die Drehzahl $n_S$ sowie für den Massenstrom $\dot{m}_S$ zugeführt. Im Regelgerät 51 wird nun unter Ausnutzung des Belastungskennfeldes 52 ein Sollwert für den Druckabfall am Hydromotor 16 $\Delta p_S$ bestimmt, aus dem die erste Stellgröße $S_V$ hergeleitet wird. Ferner wird unter Ausnutzung des Belastungskennfeldes 52 die Regelabweichung $\Delta\dot{m}$ des Massenstromes bestimmt, die sich aus der Differenz von Sollmassenstrom $\dot{m}_S$ abzüglich des berechneten Ist-Massenstroms $\overline{\dot{m}}_i$ ergibt. Mit dieser Regelabweichung $\Delta\dot{m}$ wird im Reglerglied 36 die zweite Stellgröße $S_D$ hergeleitet, mit dem die Dosiervorrichtung 13 angesteuert wird. Der Dosierregler 36 kann dabei zum Beispiel ein PI-Verhalten aufweisen. Bei der zweiten Einrichtung 50 wird ebenfalls die Erkenntnis ausgenutzt, daß sich bei einem gegebenem Massestrom $\dot{m}_i$ und über dem Hydromotor 16 auftretendem Druckgefälle $\Delta p_i$ ein Gleichgewichtszustand im Sinne einer zu $\dot{m}_i$ und $\Delta p_i$ zugehörigen Ist-Drehzahl einstellt. Aus diesem Zusammenhang ergibt sich, daß der Massenstrom $\dot{m}_i$ mittelbar über das am Hydromotor 16 verfügbare Druckgefälle $\Delta p$ und dessen Drehzahl bestimmt werden kann. Zur Einstellung derartiger Betriebspunkte ist nun als Ventil ein hydraulisches Differenzdruck-Regelventil 54 vorgesehen, das in Abhängigkeit von der zugeführten Stellgröße $S_V$ den jeweiligen Solldifferenzdruck als Druckabfall über dem Hydromotor 16 einstellt. Dieses Regelventil 54 kann als proportional arbeitende Druckwaage ausgeführt werden, mit welchem der Druckabfall über den Hydromotor 16 zwar verstellbar ist, aber auf einen konstanten Wert geregelt wird. Um eine dynamische Einstellung der Drehzahl am Hydromotor 16 zu erreichen, wird dem Solldruckabfall $\Delta p_S$ ein weiterer Signal-Anteil aufgeschaltet. Dieser Anteil errechnet sich aus der Regelabweichung der Motordrehzahlen, wobei im Belastungskennfeld 52 die Differenz aus Solldrehzahl $n_S$ abzüglich der Istdrehzahl $n_i$ gebildet wird. Diese Regelabweichung $\Delta n$ der Motordrehzahl wird über einen Regler 55 bewertet und dem Solldruckabfall $\Delta p_S$ aufgeschaltet. Der Regler 55 kann dabei zum Beispiel ein PID-Verhalten aufweisen, da er einen Stellanteil liefert, der bei Erreichen der Solldrehzahl $n_i = n_S$ zu Null abgebaut wird.

Im Betrieb arbeitet die zweite Einrichtung 50 mit dem Regelgerät 51 insofern ähnlich wie die erste Einrichtung 10 nach Figur 2, als sie unter Ausnutzung eines Belastungskennfeldes 52 in Abhängigkeit einer Istwert-Drehzahl n die zweite Stellgröße $S_D$ zur Ansteuerung der Dosiervorrichtung 13 erzeugt. Unterschiedlich jedoch ist, daß das Belastungskennfeld 52 nur einen einzigen Istwert, nämlich die Drehzahl n ausnutzt und zudem die beiden Sollwerte des Verteilerrechners 34 für den Massenstrom und für die Drehzahl verwendet, um davon abhängig auch die erste Stellgröße $S_V$ herzuleiten. Obwohl der Aufwand für das Differenzdruck-Regelventil 54, das als elektrohydraulische Proportionaldruckwaage mit Regelmagnet ausgeführt werden kann, etwas höher liegt als beim Ventil 21 nach Figur 2, ergibt sich doch durch die fehlende Sensierung mittels Druckdifferenz- bzw. Drehmomentsensor ein erheblich verringerter Darstellungsaufwand für die Zweite Einrichtung 50. Trotz des einzigen zu verarbeitenden Istwerts Drehzahl n ergibt sich eine erhebliche Verbesserung gegenüber einer rein gesteuerten Einstellung der Dosiereinrichtung 13. Vielmehr ist auch hier eine On-line-Regelung von Drehzahl und Dosierung und mit Hilfe des Modells des Belastungskennfeldes 52 auch des Massenstroms am Streuteller 14 möglich.

Selbstverständlich sind an den gezeigten Ausführungsformen Änderungen möglich, ohne vom Gedanken der Erfindung abzuweichen. So kann im Hydrauliksystem anstelle der gezeichneten Konstantpumpe mit Ventil auch eine andere Druckmittelversorgung verwendet werden, z.B. eine regelbare Verstellpumpe. Am Verteilrechner 34 im Regelgerät kann als massenstromabhängiges Eingangssignal anstelle der Streudichte $\mu_S$ auch ein Massenstromsignal $m_S$ verwendet werden.

## Patentansprüche

1. Einrichtung zur Dosierung und Verteilung von Streugut, mit einem rotierenden, mit dem Streugut (11) beschickbaren Streuteller (14) und mit einem, mit einem Druckmittel betriebenen, in seiner Drehzahl regelbaren Hydromotor (16) zum Antreiben des Streutellers (14) und mit einer steuerbaren Dosiervorrichtung (13) zur Steuerung des Massenstroms ($\dot{m}$) des Streuguts sowie mit einem Regelgerät (19, 51) zur Dosierung des Streuguts, dem zumindest als erste Eingangsgröße ein Istwert der Drehzahl ($n_i$) des Streutellers (14) und als zusätzliche Eingangsgröße eine Sollwertgröße ($\mu_S$, mS) für den geforderten Massenstrom in der Dosiervorrichtung (13) eingegeben werden und welches Regelgerät (19, 51) wenigstens als erste Stellgröße ein Steuersignal ($S_V$) für eine Regelung der Drehzahl des Hydromotors (16) und als zweite Stellgröße ein Steuersignal ($S_D$) für die Dosiervorrichtung (13) abgibt, dadurch gekennzeichnet, daß das Regelgerät (19, 51) derart ausgebildet ist, daß es mit einem abgespeicherten Belastungskennfeld (37, 52) arbeitet, in dem die belastungsabhängigen Größen in Form von Druckdifferenz ($\Delta p$) oder Drehmoment ($M_W$) am Hydromotor (16) in Abhängigkeit vom durchgesetzten Massenstrom ($m_i$) am Streuteller (14) für unterschiedliche Drehzahlen (n) abgelegt sind und davon abhängig mit der ersten Eingangsgröße Drehzahl ($n_i$) ein Istwert des Massenstroms ($\overline{\dot{m}}_i$) ermittelt wird, aus dem mit dem geforderten Sollwert des Massenstroms ($\dot{m}_S$) eine Regelabweichung des Massenstroms ($\Delta \dot{m}$) hergeleitet wird, die über ein Reglerglied (36) zur zweiten Stellgröße ($S_D$) für die Dosiereinrichtung (13) verarbeitet und zu dessen Ansteuerung verwendet wird.

2. Einrichtung nach Anspruch 1, dadurch gekennzeichnet, daß das Regelgerät (19, 51) einen Verteilerrechner (34) aufweist, dem als Eingangsgrößen die gewünschten Werte für den Massenstrom ($\mu_S$, mS), die Geschwindigkeit (v) des die Einrichtung bewegenden Fahrzeugs und die Streubreite ($b_S$) eingebbar sind und der daraus zwei Ausgangsgrößen für einen Drehzahl-Sollwert ($n_S$) und einen momentanen Massenstrom-Sollwert ($\dot{m}_S$) bildet, die insbesondere zwei zugeordneten Regelkreisen (25, 31) zuführbar sind.

3. Einrichtung nach Anspruch 1 oder 2, dadurch gekennzeichnet, daß im Druckmittelkreislauf des Hydromotors (16) ein mit der ersten Stellgröße ($S_V$) beaufschlagbares Ventil (21, 54) vorhanden ist, mit dem ein Volumenstrom zum Hydromotor und damit eine am Hydromotor (16) abfallende Druckdifferenz ($\Delta p$) des Druckmittelstroms beeinflußbar ist.

4. Einrichtung nach einem der Ansprüche 1 bis 3, dadurch gekennzeichnet, daß das Regelgerät (19) so ausgebildet ist, daß dessen Belastungskennfeld (37) zwei Istwerte für Drehzahl ($n_i$) und drehmomentabhängigen Wert ($\Delta p_i$, $M_W$) am Hydromotor (16) eingegeben werden und daraus ein Schätz-Ist-Wert ($\overline{\dot{m}}_i$) des Massenstroms ermittelt wird, wobei das Belastungskennfeld (37) in einen Rückführzweig des Massenstrom-Regelkreises (31) geschaltet ist, während im Drehzahl-Regelkreis (25) eine aus einem Vergleich von Sollwert ($n_S$) und Istwert ($n_i$) gebildete Regelabweichung ($\Delta n$) einem Drehzahlregler (35) zugeführt wird, der die erste Stellgröße ($S_V$) zur Ansteuerung des Ventils (21) bildet.

5. Einrichtung nach Anspruch 4, dadurch gekennzeichnet, daß zur Ermittlung des drehmomentabhängigen Werts am Hydromotor (16) ein den Druckabfall über den Hydromotor abgreifender Druckdifferenz-Sensor (20) oder zwei Absolutdruck-Sensoren angeordnet ist bzw. sind und das Belastungskennfeld (37) auf die zugehörige, druckdifferenzabhängige Kennlinienschar (38) abgestimmt ist.

6. Einrichtung nach Anspruch 4, dadurch gekennzeichnet, daß zur Ermittlung des drehmomentabhängigen Werts am Hydromotor (16) ein das Abtriebsdrehmoment ($M_W$) des Hydromotors (16) messender Drehmomentsensor (42) angeordnet ist und das Belastungskennfeld (37) auf die zugehörige, drehmomentabhängige Kennlinienschar (43) abgestimmt ist.

7. Einrichtung nach einem der Ansprüche 1 bis 3, dadurch gekennzeichnet, daß das Regelgerät (51) so ausgebildet ist, daß dessen Belastungskennfeld (52) der Istwert der Drehzahl ($n_i$) sowie zwei Sollwerte für die Drehzahl ($n_S$) und den Massenstrom ($\dot{m}_S$) zugeführt werden und davon abhängig eine Regelabweichung ($\Delta\dot{m}$) des Massenstroms zur Bildung der zweiten Stellgröße ($S_D$) sowie ein Sollwert einer Druckdifferenz ($\Delta p_S$) für den Hydromotor (16) zur Bildung der ersten Stellgröße ($S_V$) ermittelt werden und daß dieser Druckdifferenz-Sollwert ($\Delta p_S$) ein proportional arbeitendes Differenzdruck-Regelventil (54) steuert, das den Druckabfall über dem Hydromotor (16) auf dem jeweils eingestellten Wert konstant hält.

8. Einrichtung nach Anspruch 7, dadurch gekennzeichnet, daß aus dem Belastungskennfeld (52) eine Drehzahl-Regelabweichung ($\Delta n$) ermittelt und über einen Regler (55) dem ersten Stellsignal ($S_V$) zur Ansteuerung des Differenzdruck-Regelventils (54) aufgeschaltet wird, wobei insbesondere der Regler als PID-Regler ausgebildet ist.

$\mu_S$  $v$  $b_S$

$S_D$

10

12

13

19

$S_v$  $\Delta p$  $n$

11

18

15

14

16

22

21

20

$\Delta p$

17

Fig. 1

Fig.2

Fig.3

EP 0 945 548 A2